# EUROPEAN PATENT APPLICATION

(11) **EP 2 987 820 A1**
(43) Date of publication of application: **24.02.2016**
(21) Application number: 14181683.5
(22) Date of filing: 20.08.2014
(51) Int. Cl.: C08J 11/04, C08L 17/00, C08L 95/00, D06N 7/00, E04D 5/10, E04D 11/02

(54) **Bitumen composition comprising partially degraded waste rubber material**

(71) Applicant: VEDAG GmbH, 96050 Bamberg (DE)
(72) Inventor: Dr. Merten Thomas, 96050 Bamberg (DE); Dr. Hörnig Andreas, 96050 Bamberg (DE); Dr. Gröger Gerd, 96050 Bamberg (DE)
(74) Representative: Henkel, Breuer & Partner

(57) **Abstract**

The present invention relates to a partially degraded waste rubber material, bitumen compositions comprising said partially degraded waste rubber material, an the use of such bitumen compositions.

## Description

The present invention relates to a partially degraded waste rubber material, bitumen compositions comprising said partially degraded waste rubber material, and the use of such bitumen compositions.

Bitumen compositions are well-established products used, for example, in roofing applications, basement applications, road construction and bridge construction. In order to improve the mechanical and rheological properties of bitumen, polymer-modified bitumen compositions comprising an elastomer or a plastomer have been developed. In this context, styrene-butadiene-styrene (SBS) block copolymers and styrene-isoprene-styrene (SIS) block copolymers have been preferably utilized as elastomers. Suitable plastomers include amorphous poly-alpha olefins, e.g. atactic polypropylene (aPP), polypropylene-polyethylene copolymers, and polypropylene-polyethylene-polybutylene terpolymers.

Styrene block copolymers provide a number of technical benefits, including low temperature flexibility, good elastic recovery, high durability and excellent ageing resistance. However, the use of high amounts of styrene block copolymers in bitumen compositions renders the corresponding products relatively expensive. Hence, there is a need to reduce the amount of styrene block copolymers in polymer-modified bitumen compositions while maintaining or even improving the favourable product characteristics achieved by the addition of such polymers.

In order to solve this problem, partial substitution of styrene block copolymers by a waste rubber material such as, for example, tire rubber powder has been proposed. Bitumen compositions comprising a waste rubber material derived from automobile tires are disclosed, for example, in WO 94/14896 A1, EP 1 873 212 A1, WO 2008/120053 A2, WO 2011/074003 A2 and US 2012/0309872 A1. However, the amount of waste rubber material that can be used in polymer-modified bitumen compositions is limited by the complex rheological and mechanical profiles polymer-modified bitumen compositions have to fulfil during their life-span.

A fundamental problem associated with the use of waste rubber material is the high viscosity of the polymer-modified bitumen composition to be produced. That is, by increasing the amount of waste rubber material in a polymer-modified bitumen composition, the viscosity of the polymer-modified bitumen composition is significantly increased. Consequently, since it is not possible to process polymer-modified bitumen compositions containing a high amount of waste rubber material, the use of waste rubber material in polymer-modified bitumen compositions is limited.

Nevertheless, waste rubber material remains to be an industrial product that is available in large amounts. Accordingly, it is still considered attractive from an economic and environmental perspective to use increasing amounts of waste rubber material in the production of bituminous products, to thereby reduce the amount of relatively expensive, production energy demanding and crude oil resource depleting polymers in polymer-modified bitumen compositions, without negatively affecting the compositions' sophisticated performance characteristics.

WO 2011/138412 A1 discloses a rubber-modified bitumen composition comprising a devulcanized rubber material, wherein the devulcanized rubber material is obtained by devulcanizing a vulcanized rubber material such as, for example, waste rubber in the presence of at least one dialkyl polysulfide. For achieving the desired effect, the dialkyl polysulfides are obligatorily employed in an amount of 1 to 30% by weight, and in particular in an amount of 5 to 20% by weight, based on the weight of the rubber material to be devulcanized.

WO 2014/044856 A1 discloses rubber-modified bitumen composition which is obtained by (i) mixing a vulcanized rubber material such as, for example, crump rubber from tires with bitumen, wherein the amount of bitumen is less than the amount of the vulcanized rubber material but is at least 5% weight of the total amount of bitumen and vulcanized rubber material, (ii) heating said mixture at a temperature above 200°C, and (iii) preferably mixing the mixture, wherein at least steps (ii) and (iii) are carried out in a pressurized reactor such as, for example, an extruder.

However, the use of chemical devulcanization agents such as those proposed by WO 2011/138412 A1 is unfavourable for different reasons. In particular, polymer-modified bitumen compositions produced in the presence of a chemical devulcanization agent typically contain both unreacted devulcanization agent and chemical by-products, which is neither economical nor desirable from an environmental point of view. In contrast thereto, the process disclosed in WO 2014/044856 A1 requires relatively high temperatures of up to 370°C, in order to allow extrusion of the mixture to be processed.

In view of the above, the object underlying the invention was to provide a bitumen composition in which the amount of elastomer or plastomer is reduced as compared to conventional polymer-modified bitumen compositions, without negatively affecting the rheological and mechanical properties of conventional polymer-modified bitumen compositions. Moreover, the bitumen composition should be obtainable at low cost and should be essentially free of chemical devulcanization agents.

According to the invention, the aforementioned object is achieved by a bitumen composition comprising the following components:
(a) 30 to 85% by weight of a bitumen base;
(b) 0 to 35% by weight of at least one elastomer or plastomer;
(c) 1 to 40% by weight of a partially degraded waste rubber material having a degree of crosslinking of 0 to 90%; and
(d) 0 to 30% by weight of at least one oil.

The bitumen composition of the invention comprises a bitumen base as a first mandatory component. The bitumen base is not particularly limited and can be chosen by a person skilled in the art based on the requirements of the final product. Typical bitumen bases suitable for use in the bitumen composition of the invention include distillation bitumen of different penetration grades, high vacuum bitumen and oxidation bitumen, all of which are commercially available in a plurality of varieties. In this context, reference is made, for example, to the handbook "E. Braun, Bitumen: Anwendungsbezogene Baustoffkunde für Dach- und Bauwerksabdichtungen, Rudolf Müller, Köln, 1987", as well as to standards DIN EN 12591, DIN EN 13304 and DIN EN 13305.

As a person skilled in the art will understand, the amount of bitumen base comprised by a bitumen composition depends on several factors, including the type of application and the specific bitumen variety employed. In the bitumen composition of the invention, however, the bitumen base is contained in an amount of 30 to 85% by weight, based on the total weight of the bitumen composition. Preferably, the amount of bitumen base in the bitumen composition of the invention is 40 to 85% by weight, more preferably 50 to 85% by weight, most preferably 60 to 85% by weight.

The bitumen composition of the invention further comprises 0 to 35% by weight, preferably 0.5 to 30% by weight, more preferably 1 to 25% by weight, most preferably 3 to 20% by weight of at least one elastomer or plastomer, based on the total weight of the bitumen composition. Elastomers and plastomers suitable for use in bitumen compositions are described, for example, in the handbook "E. Braun, Bitumen: Anwendungsbezogene Baustoffkunde fur Dach- und Bauwerksabdichtungen, Rudolf Müller, Köln, 1987", and are commercially available from a plurality of polymer manufacturers known to those skilled in the art.

If the bitumen composition comprises an elastomer, the elastomer is preferably a linear or radial styrene block copolymer. More preferably, the elastomer is selected from the group consisting of a styrene-butadiene-styrene (SBS) block copolymer, a styrene-isoprene-styrene (SIS) block copolymer, a styrene-ethylene/propylene-styrene (SEPS) block copolymer and a styrene-ethylene/butylene-styrene (SEBS) block copolymer. Most preferably, the elastomer is a linear or radial SBS block copolymer. In one embodiment, the bitumen composition comprises a combination of at least two elastomers, e.g. a combination of a linear SBS block copolymer and a radial SBS block copolymer or a combination of two radial SBS block copolymers.

If the bitumen composition comprises a plastomer, the plastomer is preferably selected from the group consisting of an amorphous poly-alpha-olefin, an ethylene-butyl acrylate copolymer and an ethylene-vinyl acetate copolymer, with poly-alpha-olefins being particularly preferred. Most preferably, the plastomer is an amorphous poly-alpha-olefin selected from the group consisting of atactic polypropylene, a polypropylene-polyethylene copolymer and a polypropylene-polyethylene-polybutylene terpolymer. According to the invention, however, the use of elastomers is preferred over the use of plastomers.

The bitumen composition of the invention further comprises a partially degraded waste rubber material as a second mandatory component. As used within the present application, the expression "partially degraded waste rubber material" designates a waste rubber material which has been subjected to conditions resulting in partial devulcanization or/and partial depolymerization of the waste rubber material. Waste rubber materials suitable for use in the present invention are commercially available from a plurality of suppliers and preferably include waste tire rubber materials, i.e. waste rubber materials derived from automobile or truck tires.

The amount of partially degraded waste rubber material contained in the bitumen composition of the invention is 1 to 40% by weight, preferably 1.5 to 30% by weight, more preferably 2 to 25% by weight, most preferably 2.5 to 20% by weight, based on the total weight of the bitumen composition. If the amount of partially degraded waste rubber material is lower than 1% by weight, the economical and environmental advantage resulting from the (partial) substitution of relatively expensive elastomers or plastomers by the cheaper waste rubber material is low. On the other hand, if the amount of partially degraded waste rubber material is higher than 40% by weight, the viscosity of the bitumen composition becomes too high for further processing.

Since the addition of up to 40% by weight of untreated waste rubber material to bitumen would produce a bitumen composition having unacceptable viscosity, the bitumen composition of the invention includes a partially degraded waste rubber material having a degree of crosslinking of 0 to 90%, preferably of 15 to 60%, more preferably of 20 to 50%, most preferably of 25 to 45%. By using such partially degraded waste rubber material, it is possible to significantly reduce the amount of elastomers or plastomers contained in conventional polymer-modified bitumen compositions without deteriorating their rheological and mechanical properties. As a result thereof, it is possible to save natural resources and to simultaneously produce polymer-modified bitumen compositions at lower cost.

The partially degraded waste rubber material is preferably produced by a process effecting thermomechanical devulcanization or/and depolymerization of the waste rubber material to be degraded. That is, the partially degraded waste rubber material described herein is preferably produced in the absence of a chemical agent capable of promoting devulcanization or/and depolymerization of the waste rubber material, the wording "in the absence of a chemical agent capable of promoting devulcanization or/and depolymerization" meaning the presence of an amount of less than 1% by weight, preferably of less than 0.01% by weight, most preferably of 0% by weight of chemical agents such as water or those disclosed in WO 2011/138412 A1, based on the weight of the waste rubber material to be degraded.

In order to ensure thermomechanical devulcanization or/and depolymerisation of the waste rubber material to be degraded, the aforementioned process requires passing the waste rubber material through an extruder. An extruder suitable for use in the aforementioned process comprises means for introducing the waste rubber material into the extruder (e.g. an injection inlet), means for controlling the temperature of the waste rubber material within the extruder (e.g. one or more heating means for softening the waste rubber material), means for ensuring a high shear strain within the extruder (e.g. one or more screws configured for high shear), means for removing the partially degraded waste rubber material from the extruder (e.g. an extrusion outlet), and optionally means for removing gaseous by-products obtained in the process from the extruder (e.g. one or more gas outlets).

Extruders realizing these features are known in the art or can be provided by those skilled in the field of extruder technolgy without any difficulty by adapting a known extruder based on a low number of routine experiments. That is, the extruder employed in the aforementioned process is basically not limited to a specific type of extruder, and includes twin screw extruders, planet-roll extruders, etc. Preferably, however, the waste rubber material to be degraded is introduced into a twin screw extruder, more preferably into a counter-rotating twin screw extruder, to thereby effect devulcanization or/and depolymerization of the waste rubber material in the absence of chemical agents having the same technical effect.

In the process described above, the waste rubber material to be degraded can be in any shape or size theoretically allowing extrusion thereof. Examples comprise powders, crumbs, granules and pellets, but are not limited thereto. Preferably, however, the waste rubber material is provided in the form of a powder, the particles of which typically have an average diameter of 0.01 to 1.0 mm, preferably of 0.01 to 0.6 mm, most preferably of 0.01 to 0.4 mm. Following selection of the waste rubber material to be degraded, it is introduced into the extruder and passed through the extruder in the absence of bitumen, the wording "in the absence of bitumen" meaning the presence of an amount of less than 5% by weight, preferably of less than 1% by weight, most preferably of 0% by weight of bitumen, based on the total weight of bitumen and waste rubber material.

In the extruder, the rubber waste material is subjected to conditions which, in combination with the high shear strain provided by the screw(s), effect devulcanization or/and depolymerization thereof. Using the means for controlling the temperature of the waste rubber material, the temperature of the waste rubber material within the extruder is preferably set to a range of from 150 to 260°C, more preferably to a range of from 180 to 240°C. The pressure within the extruder is usually of from 1 to 50 bar, while the rotational speed of the screw(s) is preferably adjusted to a range of from 1 rpm to 700 rpm, more preferably to a range of from 50 rpm to 550 rpm, most preferably to a range of from 50 rpm to 400 rpm. The partially degraded waste rubber material obtained by the extrusion process is typically granulated and then directly used for preparing the bitumen composition of the invention.

The bitumen composition of the invention further comprises 0 to 30% by weight, preferably 1 to 25% by weight, more preferably 3 to 20% by weight, most preferably 5 to 15% by weight of at least one oil, based on the total weight of the bitumen composition. If present, the oil largely functions as a plasticizer or softening agent and positively influences the structural integrity of the bitumen composition. Oils suitable for use in the bitumen compositions of the invention are not particularly limited and include both natural and synthetic oils, e.g. fatty oils and mineral oils. Preferably, the oil is a mineral oil derived from industrial distillation of crude oil, e.g. a light distillate (light fuel oil), a middle distillate or a heavy distillate (heavy fuel oil).

In another aspect, the present invention relates to a filler-modified bitumen composition comprising (a) 25 to <100% by weight, preferably 30 to 90% by weight, more preferably 35 to 80% by weight, most preferably 40 to 70% by weight of the bitumen composition of the invention, and (b) >0 to 75% by weight, preferably 10 to 70% by weight, more preferably 20 to 65% by weight, most preferably 30 to 60% by weight of at least one filler, based in each case on the total weight of the filler-modified bitumen composition. Fillers suitable for use in the filler-modified bitumen composition of the invention are known to those skilled in the art and comprise, for example, flyash, slate, dolomite and limestone. According to the invention, dolomite or limestone powder is preferred. Since the filler-modified bitumen composition of the invention provides the possibility of admixing up to 75% by weight of cheap filler, it is possible to significantly reduce the production costs of conventional bitumen compositions.

The bitumen composition and the filler-modified bitumen composition of the invention can be used for a plurality of purposes, including the production of bituminous sheets, the use as a joint compound, and the use as a hot sealing compound. Details thereon, as well as further applications are described in the handbook "E. Braun, Bitumen: Anwendungsbezogene Baustoffkunde fur Dach- und Bauwerksabdichtungen, Rudolf Müller, Köln, 1987", which handbook is herewith incorporated by reference. Preferably, both the bitumen composition and the filler-modified bitumen composition of the invention is employed in roofing applications, basement applications, road construction applications and bridge construction, with roofing applications being especially preferred.

In another aspect, the present invention relates to a process for preparing a partially degraded waste rubber material, comprising the steps of:
(a) providing a waste rubber material; and
(b) passing the waste rubber material, in the absence of bitumen and a chemical agent capable of promoting devulcanization or/and depolymerisation of the waste rubber material, through an extruder under conditions effecting thermomechanical devulcanization or/and depolymerisation of the waste rubber material.

In another aspect, the present invention relates to a partially degraded waste rubber material which is obtainable by the process of the invention.

As regards any preferred embodiments of both the process and the partially degraded waste rubber material of the invention, it is explicitly referred to the preferred embodiments described in connection with the bitumen composition of the invention. As a matter of principle, the weight percentages of all components contained in either the bitumen composition or the filler-modified bitumen composition of the invention in each case add to a total of 100.

It is intended to further illustrate the invention by the following examples.

### Examples

In order to characterize the products described in the present application by concrete physical parameters, the degree of crosslinking, the viscosity, the softening point, the needle penetration, and the flexibility at low temperature has been determined using the following methods.

The degree of crosslinking of the partially degraded waste rubber material described herein was determined by measuring its swelling behavior in xylene. For this purpose, 3 g of the partially degraded waste rubber material was added to 100 ml of xylene, and the sample was allowed to stand for 3 days at room temperature. Thereafter, the swollen sample was removed from xylene, weighed, dried for 24 hours at 80°C, and weighed a final time. From this data, the degree of swelling and the amount of soluble portion was calculated.

Viscosity of the bitumen compositions described herein was determined using a HAAKE RheoStress^{®}6000 plate-plate rheometer (Thermo Scientific) including an UTMC control unit. The samples (width: 25 mm; length: 25 mm; height: 3 mm) were heated using a Peltier temperature module TM-EP-P (Thermo Scientific) and an electrical temperature module TM-EL-H (Thermo Scientific). A thermostat AC200 A28 (Thermo Scientific) was employed as a cooling element. For carrying out the measurement, the "RheoWin Job Manager" software was used. Analysis of the data was carried out using the "RheoWin Data Manager" software.

For determining the viscosity, the measuring geometry of the plate-plate rheometer (lower plate: TMP20; upper plate: P20 CS L) was preheated to a temperature of 170°C for 600 sec. Then, a sample of the composition to be examined was introduced into the measuring geometry of the plate-plate rheometer and heated to 170°C for 600 sec. Thereafter, the temperature of the sample was increased from 170°C to 195°C within 2000 sec using a constant shear speed of 14.1 seconds⁻¹, and the viscosity of the sample at 185°C was calculated from the experimental data thus obtained.

The softening point (Ring and Ball temperature) of the bitumen compositions described herein was determined in accordance with DIN EN 1427.

Needle penetration at 25°C and 50°C of the bitumen compositions described herein was determined in accordance with DIN EN 1426.

The flexibility at low temperature (cold bending temperature) of the bitumen compositions described herein was determined in accordance with DIN EN 1109.

### Example 1: Preparation of partially degraded waste rubber material

For preparing a partially degraded waste rubber material having a degree of crosslinking of 0 to 90%, a waste tire rubber material having an average particle size of 0.3 mm (Ecorr RNM45; Spreelast GmbH) was introduced into a counter-rotating twin screw extruder. The counter-rotating twin screw extruder had a length-to-diameter (L/D) ratio of 56, and was equipped with an injection inlet for introducing the waste tire rubber material, a heating system for controlling the temperature of the waste tire rubber material within the extruder, a gas outlet for removing gaseous by-products from the extruder, and an extrusion outlet for removing the partially degraded waste rubber material from the extruder. The screws of the counter-rotating twin screw extruder were configured for high shear.

In the absence of bitumen and a chemical agent capable of promoting devulcanization or/and depolymerisation of the waste tire rubber material, the waste tire rubber material was subsequently heated to a temperature of 228°C using the extruder's heating system, and was passed through the counter-rotating twin screw extruder at a screw speed of 107 rpm and a throughput of 40 kg/h. By using a combination of increased temperature and high shear, thermomechanical devulcanization or/and depolymerisation of the waste tire rubber material was achieved. The product obtained from the counter-rotating twin screw extruder was a partially degraded waste tire rubber material having a degree of crosslinking of 34%, as determined by the method described hereinbefore.

### Example 2: Preparation of bitumen composition suitable for use as cold self-adhesive

For preparing bitumen compositions suitable for use as a cold self-adhesive, bitumen (ALTEK^{®} 160/220 R; Total Deutschland GmbH), two types of radial SBS block copolymers (KRATON^{®} D1184 AT and KRATON^{®} D1118 ET; Kraton Polymers Inc.), waste tire rubber powder (Ecorr RNM45; Spreelast GmbH) or the partially degraded waste rubber material obtained in Example 1, and oil (Fluxöl; Avista Oil AG) were blended in the amounts [% by weight] specified in Table 1, to give bitumen compositions 1 and 2.

**Table 1**

| | Bitumen composition 1 * | Bitumen composition 2 |
|---|---|---|
| Bitumen | 73.5 | 69 |
| Radial SBS block copolymer (KRATON^{®} D1184 AT) | 5.5 | 5 |
| Radial SBS block copolymer (KRATON^{®} D1118 ET) | 10 | 9 |
| Waste rubber | 4 | --- |
| Partially degraded waste rubber material | --- | 8 |
| Oil | 7 | 9 |

| | | |
|---|---|---|
| * Comparative example | | |

Following production, bitumen compositions 1 and 2 were evaluated for their viscosity, Ring and Ball temperature, needle penentration at 25°C, and cold bending temperature, using the methods described hereinbefore. The results are shown in Table 2.

**Table 2**

| | Bitumen composition 1* | Bitumen composition 2 |
|---|---|---|
| Viscosity at 185°C [Pa s] | 5.2 | 5.8 |
| Ring and Ball temperature [°C] | 123 | 116 |
| Needle penetration at 25°C [1/10 mm] | 96 | 105 |
| Cold bending temperature [°C] | -38 | -40 |

| | | |
|---|---|---|
| * Comparative example | | |

### Example 3: Preparation of filler-modified bitumen composition for use at temperatures ≤ -25°C

For preparing filler-modified bitumen compositions suitable for use at temperatures of ≤ -25°C, bitumen (ALTEK^{®} 160/220 R; Total Deutschland GmbH), radial SBS block copolymer (KRATON^{®} D1184 AT; Kraton Polymers Inc.), linear SBS block copolymer (KRATON^{®} D1101 AT; Kraton Polymers Inc.), waste tire rubber powder (Ecorr RNM45; Spreelast GmbH) or the partially degraded waste rubber material obtained in Example 1, and oil (Fluxöl; Avista Oil AG) were blended in the amounts [% by weight] specified in Table 3, to give bitumen compositions 3 to 5.

**Table 3**

| | Bitumen composition 3* | Bitumen composition 4 | Bitumen composition 5 |
|---|---|---|---|
| Bitumen | 73 | 73 | 65 |
| Radial SBS block copolymer | 2.1 | 2.1 | --- |
| Linear SBS block copolymer | 8.4 | 8.4 | 5.5 |
| Waste rubber material | 9.2 | | --- |
| Partially degraded waste rubber material | --- | 9.2 | 20.5 |
| Oil | 7.3 | 7.3 | 9 |

| | | | |
|---|---|---|---|
| * Comparative example | | | |

Following production, bitumen compositions 3 to 5 were mixed with limestone powder having a particle size of 1 to 90 µm (K 87; Steinwerke Kaider Neupert-Kalk KG) at a weight ratio of 45:55, to give filler-modified (FM) bitumen compositions 1 to 3. Then, filler-modified bitumen compositions 1 to 3 were evaluated for their viscosity, Ring and Ball temperature, needle penentration at 25°C, needle penetration at 50°C, and cold bending temperature, using the methods described hereinbefore. The results are shown in Table 4.

**Table 4**

| | FM bitumen composition 1* | FM bitumen composition 2 | FM Bitumen composition 3 |
|---|---|---|---|
| Viscosity at 185°C [Pa s] | 16.3 | 12.2 | 12.3 |
| Ring and Ball temperature [°C] | 116 | 118 | 109 |
| Needle penetration at 25°C [1/10 mm] | 55 | 47 | 66 |
| Needle penetration at 50°C [1/10 mm] | 119 | 101 | 154 |
| Cold bending temperature [°C] | -32 | -30 | -26 |

| | | | |
|---|---|---|---|
| * Comparative example | | | |

### Example 4: Preparation of filler-modified bitumen composition for use at temperatures ≤ -30°C

For preparing filler-modified bitumen compositions suitable for use at temperatures of ≤ -30°C, bitumen (ALTEK^{®} 160/220 R; Total Deutschland GmbH), radial SBS block copolymer (KRATON^{®} D1184 AT; Kraton Polymers Inc.), linear SBS block copolymer (KRATON^{®} D1101 AT; Kraton Polymers Inc.), waste tire rubber powder (Ecorr RNM45; Spreelast GmbH) or the partially degraded waste rubber material obtained in Example 1, and oil (Fluxöl; Avista Oil AG) were blended in the amounts [% by weight] specified in Table 5, to give bitumen compositions 6 to 8.

**Table 5**

| | Bitumen composition 6* | Bitumen composition 7 | Bitumen composition 8 |
|---|---|---|---|
| Bitumen | 80.25 | 80.25 | 68 |
| Radial SBS block copolymer | 8.94 | 8.94 | 4.5 |
| Linear SBS block copolymer | 3.75 | 3.75 | 4.5 |
| Waste rubber | 3.08 | --- | --- |
| Degraded waste rubber material | --- | 3.08 | 15 |
| Oil | 3.98 | 3.98 | 8 |

| | | | |
|---|---|---|---|
| * Comparative example | | | |

Following production, bitumen compositions 6 and 7 were mixed with limestone powder having a particle size of 1 to 90 µm (K 87; Steinwerke Kaider Neupert-Kalk KG) at a weight ratio of 65:35, to give filler-modified (FM) bitumen compositions 4 and 5. Similarly, bitumen composition 8 was mixed with the filler at a weight ratio of 55:45, to give filler-modified bitumen composition 6. Then, filler-modified bitumen compositions 4 to 6 were evaluated for their viscosity, Ring and Ball temperature, needle penentration at 25°C, needle penetration at 50°C, and cold bending temperature, using the methods described hereinbefore. The results are shown in Table 6.

**Table 6**

| | FM bitumen composition 4* | FM bitumen composition 5 | FM Bitumen composition 6 |
|---|---|---|---|
| Viscosity at 185°C [Pa s] | 11.8 | 10.4 | 14.5 |
| Ring and Ball temperature [°C] | 130 | 127 | 120 |
| Needle penetration at 25°C [1/10 mm] | 53 | 53 | 60 |
| Needle penetration at 50°C [1/10 mm] | 98 | 94 | 124 |
| Cold bending temperature [°C] | -28 | -32 | -32 |

| | | | |
|---|---|---|---|
| * Comparative example | | | |

### Example 5: Preparation of filler-modified bitumen composition for use at temperatures ≤ -35°C

For preparing filler-modified bitumen compositions suitable for use at temperatures of ≤ -35°C, bitumen (ALTEK^{®} 160/220 R; Total Deutschland GmbH), radial SBS block copolymer (KRATON^{®} D1184 AT; Kraton Polymers Inc.), linear SBS block copolymer (KRATON^{®} D1101 AT; Kraton Polymers Inc.), waste tire rubber powder (Ecorr RNM45; Spreelast GmbH) or the partially degraded waste rubber material obtained in Example 1, and oil (Fluxöl; Avista Oil AG) were blended in the amounts [% by weight] specified in Table 7, to give bitumen compositions 9 to 11.

**Table 7**

| | Bitumen composition 9* | Bitumen composition 10 | Bitumen composition 11 |
|---|---|---|---|
| Bitumen | 69.99 | 69.99 | 68 |
| Radial SBS block copolymer | 4.3 | 4.3 | 5.5 |
| Linear SBS block copolymer | 13.2 | 13.2 | 5.5 |
| Waste rubber | 6 | --- | --- |
| Degraded waste rubber material | --- | 6 | 13 |
| Oil | 6.51 | 6.51 | 8 |

| | | | |
|---|---|---|---|
| * Comparative example | | | |

Following production, bitumen compositions 9 and 10 were mixed with limestone powder having a particle size of 1 to 90 µm (K 87; Steinwerke Kaider Neupert-Kalk KG) at a weight ratio of 65:35, to give filler-modified (FM) bitumen compositions 7 and 8. Similarly, bitumen composition 11 was mixed with the filler at a weight ratio of 60:40, to give filler-modified bitumen composition 9. Then, filler-modified bitumen compositions 7 to 9 were evaluated for their viscosity, Ring and Ball temperature, needle penentration at 25°C, needle penetration at 50°C, and cold bending temperature, using the methods described hereinbefore. The results are shown in Table 8.

**Table 8**

| | FM bitumen composition 7* | FM bitumen composition 8 | FM Bitumen composition 9 |
|---|---|---|---|
| Viscosity at 185°C [Pa s] | 22 | 20.3 | 17.1 |
| Ring and Ball temperature [°C] | 130 | 127 | 123 |
| Needle penetration at 25°C [1/10 mm] | 48 | 45 | 58 |
| Needle penetration at 50°C [1/10 mm] | 96 | 81 | 110 |
| Cold bending temperature [°C] | -40 | -40 | -36 |

| | | | |
|---|---|---|---|
| * Comparative example | | | |

## Claims

1. A bitumen composition, comprising the following components:
(a) 30 to 85% by weight of a bitumen base;
(b) 0 to 35% by weight of at least one elastomer or plastomer;
(c) 1 to 40% by weight of a partially degraded waste rubber material having a degree of crosslinking of 0 to 90%; and
(d) 0 to 30% by weight of at least one oil.

2. The bitumen composition according to claim 1, comprising 1 to 25% by weight of the at least one elastomer or plastomer, or/and comprising 3 to 20% by weight of the at least one oil.

3. The bitumen composition according to claims 1 or 2, wherein the elastomer, if present, is a styrene-butadiene-styrene block copolymer, a styrene-isoprene-styrene block copolymer, a styrene-ethylene/propylene-styrene block copolymer, or a styrene-ethylene/butylene-styrene block copolymer.

4. The bitumen composition according to claim 1 or 2, wherein the plastomer, if present, is an amorphous poly-alpha-olefin, an ethylene-butyl acrylate copolymer, or an ethylene-vinyl acetate copolymer.

5. The bitumen composition according to any one of claims 1 to 4, wherein the partially degraded waste rubber material has a degree of crosslinking of 15 to 60%.

6. The bitumen composition according to any one of claims 1 to 5, wherein the partially degraded waste rubber material is obtained by:
(a) providing a waste rubber material; and
(b) passing the waste rubber material, in the absence of bitumen and a chemical agent capable of promoting devulcanization or/and depolymerisation of the waste rubber material, through an extruder under conditions effecting thermomechanical devulcanization or/and depolymerisation of the waste rubber material.

7. The bitumen composition according to claim 6, wherein the temperature within the extruder is in the range of from 150 to 260°C, and in particular is in the range of from 180 to 240°C.

8. The bitumen composition according to claim 6 or 7, wherein the extruder is a twin screw extruder, and in particular is a counter-rotating twin screw extruder.

9. A filler-modified bitumen composition, comprising the following components:
(a) 25 to <100% by weight of the bitumen composition according to any one of claims 1 to 8; and
(b) >0 to 75% by weight of a filler.

10. The filler-modified bitumen composition according to claim 9, wherein the filler is dolomite or limestone powder.

11. A bituminous sheet, comprising a bitumen composition according to any one of claims 1 to 8, or a filler-modified bitumen composition of claim 9 or 10.

12. Use of the bitumen composition according to any one of claims 1 to 8, or of the filler-modified bitumen composition of claim 9 or 10 as a joint compound or as a hot sealing compound, particularly in roofing applications, basement applications, road construction applications or bridge construction applications.

13. A process for preparing a partially degraded waste rubber material, comprising the steps of:
(a) providing a waste rubber material; and
(b) passing the waste rubber material, in the absence of bitumen and a chemical agent capable of promoting devulcanization or/and depolymerisation of the waste rubber material, through an extruder under conditions effecting thermomechanical devulcanization or/and depolymerisation of the waste rubber material.

14. A partially degraded waste rubber material, obtainable by the method of claim 13.
